Europäisches Patentamt

European Patent Office

Office européen des brevets

(11) Publication number: **0 363 138**
**A1**

(12) **EUROPEAN PATENT APPLICATION**

(21) Application number: 89310080.0

(51) Int. Cl.5: **C25D 11/18 , B01D 71/02**

(22) Date of filing: 03.10.89

(30) Priority: 05.10.88 GB 8823417

(43) Date of publication of application:
11.04.90 Bulletin 90/15

(84) Designated Contracting States:
BE CH DE ES FR GB GR IT LI NL SE

(71) Applicant: ALCAN INTERNATIONAL LIMITED
1188 Sherbrooke Street West
Montreal Quebec H3A 3G2(CA)

(72) Inventor: McAlpine, Eoghan
7 Sycamore Drive
Banbury Oxon(GB)
Inventor: Landham, Rowena Roshanthi
1 Blackthorne Close
Solihull West Midlands B91 1PF(GB)
Inventor: Thornton, Martin Cyril
28 The Grebes Way
Bishop Itchington Warwickshire CV33
0PY(GB)

(74) Representative: Pennant, Pyers et al
Stevens, Hewlett & Perkins 5 Quality Court
Chancery Lane
London, WC2A 1HZ(GB)

(54) **Treating porous anodic aluminium oxide membrane.**

(57) The invention concerns methods of improving the chemical resistance of porous anodic aluminium oxide membranes such as are used for filters. The membranes may simply be heated to temperatures above 650°C, typically 850 - 1250°C. Or a sol or solution of a metal compound in a volatile liquid may be applied to the membrane and decomposed to form a metal oxide coating on interior and exterior surfaces thereof, the coated membrane being heated to at least 100°C, preferably 250 - 650°C. Preferred coatings are oxides of Ta, Nb, Ti and Zr.

EP 0 363 138 A1

## TREATING POROUS ANODIC ALUMINIUM OXIDE MEMBRANES

When an aluminium metal substrate is anodised in an electrolyte having some dissolving power for alumina (such as sulphuric, phosporic or oxalic acid), an anodic oxide film is formed on the surface. The film has a relatively thick porous layer comprising regularly spaced pores extending from the outer surface in towards the metal; and the relatively thin non-porous layer adjacent to the metal/oxide interface. As anodising continues, metal is converted to oxide at the metal/oxide interface, and the pores extend further into the film, so that the thickness of the barrier layer remains constant. The cross-section and spacing of the pores and the thickness of the barrier layer are all proportional to the anodising voltage.

Various techniques for separating the oxide film from the metal substrate and removing the barrier layer have been described, which result in a porous anodic oxide film. For example EPA 178831 describes a voltage reduction technique which effects simultaneous thinning of the barrier layer and removal of the film from the metal substrate. In contrast to conventional porous anodic aluminium oxide membranes which have generally cylindrical pores extending straight through, the product of EPA 178831 is an asymmetric membrane in which a system of larger pores extends in from one major surface and interconnects with a system of smaller pores extending in from the other surface.

These porous membranes have various applications, as filters for separating liquid and gas mixtures, and as porous supports for catalyst systems and biological systems. For all these applications, the chemical resistance, that is to say the resistance to degradation by the various chemicals with which they come in contact, of the membranes is important. Indeed, these porous anodic membranes have chemical resistance comparable to porous glass and much superior to organic materials. But there is a need for porous anodic membranes which have improved chemical resistance, particularly at extremes of acid and alkaline pH or in high purity water e.g. having a resistivity of 18 MOhm or higher.

US patent 4595609 describes a method of improving the corrosion resistance of a substrate having free surface hydroxyl groups by applying to the surface a partially hydrolysed solution of a tantalum lower alkoxide in an organic solvent, evaporating the solvent, and curing the resulting film by exposure to humid atmosphere at ambient temperature. Alumina is mentioned as an example of a substrate. There is no teaching or suggestion to cure the film at high temperatures.

Porous anodic aluminium oxide membranes have been heated for various purposes unconnected with corrosion resistance. EPA 242208 describes a technique which involves applying an inorganic oxide sol to overlie a surface of a porous anodic oxide membrane, converting the sol to a gel layer, and heating the composite membrane to 450°C to transform the gel layer to a microporous refractory film; but the sol does not significantly enter the pores of the anodic membrane.

EPA 267739 describes a technique which involves wetting a porous anodic aluminium oxide sheet, forming the wetted sheet into a desired shape, and heat setting the formed sheet by heating at 200°C to 650°C.

In one aspect this invention provides a method of treating a porous anodic aluminium oxide membrane to improve its chemical resistance, which method comprises heating at least the surface of the membrane to a temperature of more than 650°C. In another aspect this invention provides a method of treating a porous anodic aluminium oxide membrane to improve its chemical resistance, which method comprises applying a compound of a metal selected from Cr, Ga, Hf, Nb, Ta, Ti, Si, Ce, Y, Th, Sn, Ge, In, V, Fe, Co, B and Zr to form a layer on the interior and exterior surfaces thereof, decomposing the compound to form a metal oxide coating on the interior and exterior surface and heating the membrane to a temperature of at least 100°C.

A membrane is deemed to be porous if it has a flow rate of pure water of at least $2cm^3/cm^2.sec.atm$. The porous anodic aluminium oxide membranes may be of the conventional symmetric type, or of the asymmetric type as described in EPA 178831, which may typically have a minimum pore diameter in the region of 5 to 200 nm. Such films are porous as made, and indeed generally have a flow rate of at least $10cm^3/cm^2.sec.atm$. without the need for etching or other pore enlarging treatment which inevitably weakens the membrane. Provided it is porous, the dimensions of the anodic membrane (thickness and pore length, diameter and spacing) are not material to the invention; nor is it material whether the membrane is symmetric or asymmetric.

As formed, anodic oxide membranes generally comprise aluminium oxide in an amorphous form. It is believed that the heating step of the present invention involves some transformation to alpha-alumina, the ultimately stable form of alumina which is known to be more chemically resistant than other forms. However, the transformation is not straightforward and not understood; for example, although heating anodic oxide membranes to above 650°C increases chemical resistance, it may also increase capacity to absorb probe molecules such as ammonia. The treatment preferably involves maintaining the membrane at a temperature of from 750°C to 1400°C or even more, particularly from 850°C to 1250°C, for a period of from 1 minute to 24 hours, particularly 5 minutes to 10 hours. For the best possible chemical resistance particularly to acid, higher temperatures are preferred, and our work to date has not suggested that any upper temperature limit exists. However, membranes may become more brittle at higher temperatures. Also, if an asymmetric membrane is simply laid on a block and heated, warping may begin to occur at about 650°C. Placing a weight on the membrane can delay the onset of warping until higher temperatures are reached. A preferred technique involves making a stack of refractory blocks and anodic membranes and inserting the stack into a preheated furnace. Rapid heating of the membranes to the required temperature may reduce the tendency of the membrane to fracture. For refractory blocks, silicon carbide, alumina and graphite are suitable.

The time of heating should preferably be sufficient to transform the substantially amorphous structure of the anodic film to one which contains significant amounts of a more ordered structure for example alpha or one of the intermediate phases such as gamma, theta, kappa or delta. Transformation to a more ordered structure may be observed by a change in the X-ray diffraction pattern to one showing different phases present in the product. Shorter times are generally appropriate at higher temperatures.

A preferred heating method involves placing the membrane in a furnace, if necessary under physical restraint to prevent warping. It may be helpful to include chemicals in the furnace that are known to favour transformation to a more ordered structure, such as for example iron salts (e.g. by dipping in ferric chloride solution) or halogens (in the furnace atmosphere). The membrane may be heated by conventional means including microwave radiation. But since chemical resistance is a surface phenomenon, it may be sufficient to heat merely the surface of the membrane without also heating its bulk. Such rapid surface heating may be achieved by gamma-irradiation, plasma oxidative treatment, flash firing, treatment with a laser-beam of UV, visible or IR radiation, or by means of high energy electrons. Such treatment may involve momentarily raising the surface temperature to high levels, even above 1100°C.

The invention also includes a preferred technique for further increasing chemical resistance. A compound of a metal selected from Cr, Ga, Hf, Nb, Ta, Ti, Si Ce, Y, Th, Sn, Ge, In, V, Fe, Co, B and Zr is applied to the interior and exterior surfaces of the membrane and there decomposed, either by hydrolysis or by heating the membrane, to form a metal oxide layer on the interior and exterior surfaces. This metal oxide layer may not by itself confer significant chemical resistance. But when the membrane carrying the metal oxide layer is heated to at least 100°C and preferably at least 250°C, significantly improved chemical resistance is obtained. Thus in another aspect the invention provides a porous anodic aluminium oxide membrane carrying on its interior and exterior surfaces a coating of a substantially anhydrous oxide of a metal selected from the group consisting of Cr, Ga, Hf, Nb, Ta, Ti, Si, Ce, Y, Th, Sn, Ge, In, V, Fe, Co, B and Zr.

The treatment involves coating the interior and exterior surfaces of the membranes. That is to say, the applied fluid does not merely form a coating layer overlying a surface of the membrane, but penetrates the pores of the membrane and forms a coating on the pore walls but without permanently blocking the pores. The applied fluid may be an aqueous hydrous oxide sol, such as that described in our European Patent Application 89308114.1. If phosphate groups are present in the anodic membrane, as a result of its having been made by anodizing in a phosphoric acid electrolyte, these may gel the sol and form the desired surface coating.

Or a solution of a metal salt in a volatile solvent, e.g. a hydrophilic organic solvent, may be applied to the membrane. Preferably, the metal salt is a lower alkoxide or lower alkanoate or an oxychloride. Examples which we have used with success include zirconium n-propoxide in n-propanol, hexane, ethanol and ethylene glycol, zirconium oxychloride in aqueous media; tantalum ethoxide in ethanol; zirconium propanoate in n-propanol, niobium ethoxide in ethanol; and titanium tetraisopropoxide in isopropanol.

If desired, the metal salt can be partially hydrolysed prior to application to the membrane, for example by the addition of a controlled amount of water to the organic solvent solution. This may have the effect of increasing the viscosity of the solution, resulting in deposition of a thicker layer on application to the membrane. The amount of water used should be sufficient for the resulting mixture to provide an effective coating on interior and exterior surfaces of the porous membrane, but not so much that the coating blocks the pores.

Application may be by any convenient method, e.g. by dip-coating or spraying, or preferably by vacuum filtration. Chemical vapour deposition is another application technique. Afterwards, the volatile solvent may be evaporated off, leaving a metal oxide/alkoxide layer on the surface. The film may be partially cured by exposure to a humid atmosphere at ambient temperature for e.g. 1 to 48 hours. But so far as alumina membranes are concerned, curing is not completed, and organic groups not finally removed, until the membrane is heated as described above at a temperature of at least 100°C or 250°C and preferably at least 450°C.

EPA 242208 describes composite membranes comprising an anodic oxide substrate and a superimposed microporous film formed by a sol-gel technique. It may be useful according to the present invention to apply an inorganic (e.g. hydrous metal oxide) sol to an anodic oxide substrate which has been treated to improve its chemical resistance.

As noted above, anodic oxide membranes, particularly those of the asymmetric type, can have very fine pores of the order of 5 to 100 nm diameter. There may be a danger that the applied metal oxide layer may partly or completely block these pores. In these circumstances it will generally be preferable not to partially pre-hydrolyse the hydrolysable metal salt. As can be seen in scanning electron micrographs, the applied metal oxide layer extends over the surface of the membrane and down into the pores even into the fine pores of asymmetric membranes. That the layer is not continuous, or is at least porous, is shown by the fact that the treated membranes still show a small weight loss after pro-longed immersion in acid. It is thought that the thickness of the metal oxide layer is typically less than 15nm and probably less than 10nm at least in the fine pore region of asymmetric membranes.

Prior to the heating step, and to the application of a hydrolysable metal salt if this is carried out, it may be advantageous to pre-treat the membrane by immersion in a solution of a silicate, phosphate or borate. An aqueous solution of an alkaline metal metasilicate such as sodium metasilicate is preferred. The concentration is preferably from 1% up to saturation, typically in the range 3 to 5% by weight. The temperature may be ambient such as from 10 to 30°C. The period of immersion of the membrane in the solution is generally in the range 1 second to 10 minutes and may typically be around 5 seconds. Immersion time needs to be adjusted, in relation to other process variables, to be sufficient to modify the interior and exterior surfaces of the membrane, but not so great as to deposit substantial amounts of material in a way that might reduce the diameter of the pores or even block them completely. This pre-treatment should be followed by rinsing the membrane in distilled water.

The sequence: optional silicate pre-treatment; optional pre-treatment with hydrolysable metal salt; heating, gives rise to porous membranes having improved resistance to a wide range of chemicals. In the following experimental section, this improved chemical resistance was tested by measuring weight loss after immersion of the membrane in a KCl/HCl buffer at pH 1.0. Examples 1, 6 and 7 show the effect of the heating step. Examples 2 to 5 and 8 show the added effects of applying a hydrolysable metal salt with or without silicate pre-treatment.

In all this work, asymmetric porous anodic aluminium oxide membranes were used made by the technique described in EPA 178831 using a mixed acid electrolyte. The membranes were 60 microns (or where indicated 30 or 15 microns) thick, and included a system of small pores with a minimum diameter of 20 nm.

EXAMPLE 1

Heating Conditions

Heating was done at four temperatures 450, 650, 850 and 1100°C. Membranes were heated at a rate of 50°C/h to the required temperature, and held there, usually for 1 h. (Variations included holding at 650°C for 10 h, or heating to 650°C for 1 h, in an atmosphere of ammonium fluoride.) Membranes were placed on a ceramic block during the heating process. Below 650°C, 60 microns thick membranes remained flat, whereas slight warping occurred at 650°C, which became significant above this temperature. If ceramic weights were used, slight warping occurred at 850°C, which became significant at 1100°C. Flat, 15 microns thick membranes, heated at 850°C could also be produced using the weights.

Dissolution test procedures

i) Membranes were dried for 1 h at 50°C in an oven.

ii) After weighing to 5 decimal places, they were immersed in a 50 ml 0.2 mol/l KCl/HCl buffer, pH 1.00 ±0.02, and left at room temperature for 17 h.

iii) After rinsing in 3 changes of 50 ml distilled/deionised water, the membranes were again dried for 1 h at 50°C.

4

iv) After weighing to 5 decimal places, weight loss was calculated as a percentage of the initial weight. The percentage weight loss was then taken as an indicator of the degree of acid resistance compared to untreated membrane (the lower the weight loss, the greater the acid resistance).

| Results | | |
|---|---|---|
| Membrane | Treatment | Weight Loss (%) |
| 60 microns | None | 31.5 |
| | Heated, 1h, 450°C | 18.0 |
| | 650°C | 14.5 |
| | 850°C | 10.5 |
| | 1100°C | 11.5 |
| | 10h, 650°C | 15.2 |
| | NH₄F atmosphere 1h, 650°C | 13.4 |
| 15 microns | None | 32.0 |
| | Heated 1h, 650°C | 13.0 |

In all cases, the heating step considerably improved acid resistance. A small further improvement was obtained by use of an ammonium fluoride atmosphere. It was confirmed that pore closure did not occur as a result of the above heat treatments.

It should be noted that static tests, such as this one, do not necessarily give a reliable prediction as to performance of the membrane in a flow-through mode.

EXAMPLE 2

Precursors to the desired oxides were dissolved in appropriate solvents, organic or aqueous, forming solutions which varied in concentration from < 1,0 to 5% by weight. The coatings were applied to the membranes by dip coating under controlled conditions or by vacuum-assisted filtration of a known volume of solution through the membrane.

Precursors investigated were zirconium n-propoxide in each of the following solvents, n-propanol, hexane, ethanol and ethylene glycol; zirconium oxychloride in aqueous media; tantalum ethoxide in ethanol; zirconium propanoate in n-propanol and niobium ethoxide in ethanol. Oxide coatings were deposited onto untreated membrane and also onto membrane which had been pre-treated with a 5% (wt) sodium silicate solution. Coating was followed by heating to 650°C (using a heatng rate of 50°C per hour).

Evaluation

Scanning electron microscopy and transmissin electron microscopy were used to examine the coated membranes.

Total weight loss was determined after exposure of the membrane to buffered pH 1 solutions for 17 hours.

Ferrocyanide dye and albumin transmission were determined before and after exposure to pH 1 solutions, using an in-house test station.

Results

Table 1 compares total weight loss after exposure to pH 1 solutions for untreated, heated, and coated and heated membranes respectively. A clear improvement in acid resistance was achieved by coating with the inert oxides followed by heating.

5

TABLE 1

| EFFECT OF OXIDE COATING ON DISSOLUTION | |
|---|---|
| Treatment | Relative Dissolution pH1 17h |
| None | 100 |
| Heated | 45 |
| $Ta_2O_5$ coated and heated | 30 |
| Pre-treated, $Ta_2O_5$ coated and heated | 15 |
| $ZrO_2$ coated and heated | 15 |
| Pre-treated, $ZrO_2$ coated and heated | 40 |
| $Nb_2O_5$ coated and heated | 40 |
| Pre-treated, $Nb_2O_5$ coated and heated | 30 |

The ferrocyanide dye and albumin transmission test was used to confirm that the pores of the membranes had not been either unduly restricted or enlarged by the treatments. Passage of ferrocyanide dye through the membranes after treatment confirmed that restriction or closure of pores had not significantly taken place. The success of the treated membranes in preventing passage of albumin (which does not pass through 25 nm diameter pores) confirmed that pore enlargement had not significantly taken place, even after exposure to acid for 17 hours. Transmission electron microscopy indicated that any corrosive dissolution was in the coarse pore region of the membrane, and that corrosive dissolution in the fine pore system was effectively suppressed by the metal oxide coating treatment.

EXAMPLE 3

This example investigates further the effect of pre-treatment of membranes with a hydrolysable zirconium salt. Zirconium proponate was used at a rate of either 1g or 3g per 100 ml of propanol solvent. Two kinds of treatment were used:
    a) immersion of the membrane in the solution for 5 minutes;
    b) vacuum filtration of 2 ml of the solution through the membrane.
After the propanol had evaporated off, the membranes were in some cases heated to 650°C at a heating rate of 50°C per hour. In some cases also, the membrane had been pre-treated by immersion for 5 seconds in a 5% solution of sodium silicate. Chemical resistance of the treated membranes was tested as described in Example 2 by immersion for 17 hours in a KCl/HCl solution buffered at pH 1, followed by weight loss measurements. The results are set out in the following Table.

TABLE 2

| Pre-treatment | | Concentration (g/100ml) | Treatment Type | Heating | WT loss % after pH1 |
|---|---|---|---|---|---|
| Silicate | Zirconium | | | | |
| - | - | | | + | 21.6 |
| - | + | 1 | a | + | 7.7 |
| - | + | 3 | a | + | 4.9 |
| - | - | | | - | 36.2 |
| - | + | 3 | b | - | 36.0 |
| - | + | 3 | b | + | 11.8 |
| + | + | 3 | b | - | 38.7 |
| + | + | 3 | b | + | 13.8 |

The zirconium treatment is only effective when the membrane is afterwards heated.

EXAMPLE 4

For this experiment there was used a partially hydrolysed solution of titanium tetraisopropoxide in isopropanol, at a concentration of $5g\,TiO_2\,l^{-1}$. A coating was deposited by vacuum filtration of the alcoholic solution through the membranes, followed by air-drying. The membranes were then heated at 400°C.

Electron probe micro analysis of cross-sections of the membrane revealed that titanium dioxide coating was uniformly distributed through the thickness of the membrane. The flow rate of water through the coated membrane was similar to that of the unmodified membrane, indicating that no significant geometric change had occurred as a result of the treatment.

Asymmetric membranes of the kind used in the examples were determined to have porosities approximately in the range 8 to 16 $cm^3/cm^2.sec.atm$. The porosity of membranes with coarser pores would be higher.

EXAMPLE 5

Dip coated membranes were prepared as follows. A stock solution of 10% (w/v) tantalum ethoxide in dry ethanol was prepared and diluted with ethanol containing sufficient water to produce a 5% (w/v) tantalum ethoxide solution containing 1.5 mole fraction water (1.5 moles of water per mole of $Ta(OEt)_5$). Membranes were then dipped in this solution for 15 minutes under a dry inert atmosphere (less than 10% RH). Each of the membranes was removed and separately rinsed in dry ethanol and then allowed to dry. Subsequently membranes were heated on ceramic blocks at 50°C/h to 650°C and then held for 1 hour at this temperature and then allowed to cool to room temperature. These samples showed considerable improvement in acid resistance (pH 1). The weight losses after 16 hours static exposure to pH 1 buffer (0.1M KCl/HCl) are shown in Table 3. Examination of the tantalum oxide coating by electron probe elemental analysis revealed an even coating of tantalum across the thickness of the membrane.

TABLE 3

| Sample | % wt Loss (pH 1) | Air flow rates l/min 5 psi |
|---|---|---|
| Untreated | 30.4 | 0.95 |
| 650°C Heat Treated | 14.6 | 0.95 |
| $Ta_2O_5/650°C$ Heat Treated | 7.2 | 0.85 |

EXAMPLE 6

30 micron thick asymmetric anodic membranes produced from mixed oxalic/phosphoric acid electrolytes were sandwiched between blocks of alumina and placed in a furnace at 1250°C. The assembly was held at temperature for between 1 and 3 hours before cooling to room temperature. This treatment introduced some dimpling of the membrane and an increase in the brittleness, but the overall dimensional and structural integrity was maintained. Scanning electron microscopy confirmed the retention of the capillary pore structure.

The crystal structure of the bulk of the membrane was investigated by X-ray diffraction (XRD) and the surface structure was investigated by laser Raman microscopy (LRM). Chemical resistance of membranes was determined by visual examination or electron microscopy after either simple immersion of the membranes in hot acid or hot alkali solution or after exposure to solution at pH 1 or pH 10.3 flowing over their surface. Water flow rate through the membranes at 10 psi was measured to assess the effects of the various treatments on the porosity. The results are summarised in Table 4.

Calcination at 1250°C increases the chemical resistance of the membrane and causes transformation of the amorphous anodic oxide membrane to a more crystalline structure. Water flow through the membrane is increased slightly by calcination indicating a slight increase in the pore size, but the asymmetric pore structure remains. The sample heated at 4000°C/hr and held at 1250°C for 3 hours showed some evidence of structural differences in the bulk alumina compared with the other samples in this group which had been held for 1 or 2 hours at the calcining temperature. Slower heating rates e.g. 600°C/hr, combined with shorter holding times also bring about the observed structural changes. It is envisaged that particular structural forms may find special uses.

TABLE 4

| Crystal Structure | | | Chemical Resistance | | | | Water Flow |
|---|---|---|---|---|---|---|---|
| Time at 1250°C hours | Surface | Bulk | Immersion at 80°-90°C | | Cross flow | | |
| | | | 10% NaOH | 33% $HP_3O_4$ | pH 1 | pH 10.3 | rate ml/min 10 psi |
| 0 | Amorphous possibly with hydroxy species | Amorphous | Dissolved <5 min | Dissolved <2 min | Dissolved 24 hours | Dissolved $2\frac{1}{2}$ hours | 12.7 |
| 1 | Some α | α + gamma | fragmented after 45 min | fragmented 40 min | Intact after 74 hours | intact after 65 hours | 17.0 |
| 2 | Some α | α + gamma + theta | -- | -- | -- | -- | 16.25 |
| 3 | Strong α | α | -- | -- | -- | intact after 65 hours | -- |
| 3* | | kappa, theta, delta | -- | -- | -- | intact after 54 hours | 14.6 |

* Heated to 1250°C at 4000°C/hour and after 3 hours cooled at 500°C/hours

## EXAMPLE 7

An asymmetric membrane similar to those used in Example 6 was immersed in ferric chloride for 10 minutes and then heated to 1185 °C for 1 hour. The calcined membrane exhibited sharp alpha peaks indicating a lowering of the calcination temperature caused by the pretreatment with ferric chloride.

## EXAMPLE 8

47mm dia discs of asymmetric membrane were coated either by 15 minute immersion in a 1% solution of Ta alkoxide in ethanol followed by air drying or by vacuum filtration of the solution through the membrane. The coated membranes were heated at 50°C/hour to 500°C in air and held at temperature for 1 hour before furnace cooling to room temperature.

Pure water having a resistivity of 18 Mohms was passed through the discs for 3 to 24 hours at a pressure of 30 psi and the amount of aluminium extracted measured in parts per billion (ppb) at any instant.

| Membrane | PPb after 3 hours | PPb after 24 hours |
|---|---|---|
| As Received | 15 | - |
| Calcined 600°C | 10 | - |
| Vacuum Filtration Coated and Calcined 600°C | 4.3 | - |
| Immersion Coated and Calcined 600°C | 1.0* | 1.8 |

* 2 hours and 20 minutes

## EXAMPLE 9

### Sample preparation

A 10% (weight/volume) solution of tantalum ethoxide was prepared using dry ethanol (<0.005% $H_2O$) within a dry box (relative humidity <5%). To 57 ml of this solution was added 50 ml of ethanol containing 0.332 $\mu$l of water. Thus giving a solution of 0.131 molar $Ta(OEt)_5$ with 0.172 molar $H_2O$. This gives a ratio of 1.32 molefractions water to $Ta(OEt)_5$ (5.3% $Ta(OEt)_5$ by weight).

Anodic oxide membranes of pore size 0.02 um (25 mm discs 60 um thick) were immersed in this solution for >10 minutes separately removed, dip rinsed in dry ethanol and allowed to dry at room temperature.

Batches of 6 membranes in each were calcined in a furnace at a ramp rate of 60°C/hr and held at the required temperature for 1 hour before allowing to cool. Samples were calcined at 200, 350, 500 and 650°C with room temperature controls. For each temperature a batch of 6 uncoated membrane was included as calcined controls.

### Experimental

Membranes were tested for dissolution resistance at pH1 using standard conditions (static in 25 ml buffer for 17 hours at room temperature). The buffer was 0.1m HC1/KC1.

The percentage weight losses are given in Table 5. Membranes were tested for air flow (at 70 kPa) to give a measure of relative pore blockage (see table 1).

### Conclusions

At pH1 dissolution decreases with increasing calcining temperatures but at temperatures of ≤500°C any further improvement due to tantalum oxide coating is approximately in proportion to the percentage loss of air flow rates.

However, at 650° the 53% decrease in dissolution at pH1 with Tantalum oxide coating is a significant reduction that outweighs the 12% loss in air flow rate through the membrane.

## TABLE 5

| Calcination Temperature | Ta Coating | Average dissolution (%) pH1 | Air flow rates before dissolution at 70kPa l/min |
|---|---|---|---|
| 25°C | Yes | 23.6 | 0.95 |
| 25°C | No | 27.4 | 1.3 |
| 200°C | Yes | 19.4 | 1.0 |
| 200°C | No | | 1.45 |
| 350°C | Yes | 14.6 | 1.2 |
| 350°C | No | | 1.45 |
| 500°C | Yes | 11.6 | 1.1 |
| 500°C | No | | 1.35 |
| 650°C | Yes | 7.0 | 1.27 |
| 650°C | No | | 1.45 |

## EXAMPLE 10

60 microns or 30 microns asymmetric andic membranes were calcined at temperature between 650 and 1250°C between SiC blocks or between graphite blocks in a reducing atmosphere of 5% hydrogen and 95% argon. The heating rate was 3000°C/h with SiC blocks. The samples were held at temperature shown in Table 6 before furnace cooling to room temperature. The membranes were then supported in a flow through device and pure water having a resistivity of 18 M was passed through the discs at a pressure of 280 kPa for up to 65 hours. The flow rate through the membrane was measured at the start and at the end of exposure.

The flow rate at the start of the experiment was found to vary from membrane to membrane probably because of variations in support procedure. However, the change in flow rate as the test proceed provided a sensitive measure of the resistance of the membrane to attack.

Membranes were also examined by scanning electron microscopy after testing to assess the amount of dissolution. The results are presented in Table 6.

| Specimen Number | Membrane Type Pore Size/Thickness (in microns) | Time at Temperature (Hours) | Observations | |
|---|---|---|---|---|
| 1 | .02/60 Standard ANOPORE | --- | Flow rate increase from 20 to 40 ml/min over 24 h. | SEM shows asymmetric layer dissolution |
| 2 | .02/60 SiC calcination 650°C | 1 hour | Flow rate increased from 26 ml/min to 35 ml/min over 19 h shows extensive dissolution | |
| 3 | .02/60 SiC 850°C calcination | 1 hour | Flow rate increased from 44 ml/min to 50 ml/min after 19 h | |
| 4 | .02/30 SiC calcination 1000°C | 1 hour | Flow rate constant at 42 ml/min over over 65 h | |
| 5 | .02/60 SiC calcination 1250°C | 5 min | Flow rate constant at 25 ml/min over 65 h | |
| 6 | .02/30 Graphite calcination 1000°C | 1 hour | Flow rate deteriorated 28 --> 40 ml/min membrane cracked | SEM shows asymmetric layer intact |

EXAMPLE 11

Membranes were calcined as in Example 10 and then exposed to a solution of pH14 at a pressure of 70 kPa as in Example 10. In this case filters having good chemical resistance showed a decrease in flow rate with time as the fine pores became blocked by residue in the solution. The results are given in Table 7.

| Specimen Number | Membrane Type Pore Size/Thickness (in microns) | Time at Temperature (Hours) | Observations | |
|---|---|---|---|---|
| 1 | .02/60 Standard ANOPORE | --- | Membrane dissolved with 10 min | |
| 2 | .02/60 SiC calcination 650°C | 1 hour | Membrane dissolved within 30 min | |
| 3 | .02/60 SiC calcination 850°C | 1 hour | Membrane dissolved within 30 min | |
| 4 | .02/30 SiC calcination 1000°C | 1 hour | Flow rate 8 ml --> 5 ml over 3 h exposure | SEM showed pore blockage by contaminants |
| 5 | .02/30 SiC calcination 1250°C | 5 min | Flow 12 ml/min --> 5 ml/min after 30 h exposure | SEM showed pore blockage by particulate contaminants |
| 6 | .02/30 Graphite calcination 1000°C | 1 hour | Flow rate decreased from 14 ml/min to 2 ml/min over 3 h | SEM showed pore blockage by particulate contaminants |

SEM examination supports the deduction that the pores become blocked by residue during the filter procedure.

## Claims

1. A method of treating a porous anodic aluminium oxide membrane to improve its chemical resistance, which method comprises heating at least the surface of the membrane to a temperature of more than 650°C.

2. A method as claimed in claim 1, where the membrane is maintained at a temperature of from 850°C to 1250°C for from 1 minute to 24 hours.

3. A method as claimed in claim 1 or claim 2, wherein the membrane has a substantially uniform minimum pore size in the range of 5 - 200 nm.

4. A method of treating a porous anodic aluminium oxide membrane to improve its chemical resistance, which method comprises applying a compound of a metal selected from Cr, Ga, Hf, Nb, Ta, Ti, Si, Ce, Y, Th, Sn, Ge, In, V, Fe, Co, B and Zr to form a layer on the interior and exterior surfaces thereof, decomposing the compound to form a metal oxide coating on the interior and exterior surfaces and heating the membrane to a temperature of at least 100°C.

5. A method as claimed in claim 4, wherein a solution of a hydrolysable metal salt in a volatile solvent is applied to the membrane.

6. A method as claimed in claim 4 or claim 5, wherein a solution of a tantalum lower alkoxide in a volatile organic solvent is applied to the membrane.

7. A method as claimed in claim 4 or claim 5, wherein a solution of a lower alkoxide or lower alkanoate of Nb, Ti or Zr in a volatile organic solvent is applied to the membrane.

8. A method as claimed in claim 4 or claim 5, wherein an aqueous inorganic hydrous oxide sol is applied to the membrane.

9. A method as claimed in any one of claims 4 to 8, wherein a solution or sol of the metal compound is applied to the membrane by vacuum filtration.

10. A method as claimed in any one of claims 1 to 9, wherein the membrane has been pre-treated with a solution of a silicate, borate or phosphate.

11. A porous anodic aluminium oxide membrane carrying on its interior and exterior surfaces a coating of a substantially anhydrous oxide of a metal selected from the group consisting of Cr, Ga, Hf, Nb, Ta, Ti, Si, Ce, Y, Th, Sn, Ge, In, V, Fe, Co, B and Zr.

12. A membrane as claimed in claim 11 wherein the metal is selected from Ta, Nb, Ti and Zr.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A,D | EP-A-0 242 208 (ALCAN) *.Page 2, lines 45-60; page 3, lines 5-45; page 6, lines 20-45; claims * | 1-12 | C 25 D 11/18 B 01 D 71/02 |
| A,D | EP-A-0 267 739 (ALCAN) * Page 3, lines 11-15; claims * | 1,2 | |
| A | CHEMICAL ABSTRACTS, vol. 103, no. 14, October 1985, page 492, abstract no. 112259t, Columbus, Ohio, US; & JP-A-60 103 199 (CANON K.K.) 07-06-1958 | | |

TECHNICAL FIELDS SEARCHED (Int. Cl.5)

C 25 D 11/04
C 25 D 11/18
C 25 D 11/24
B 01 D 71/02

The present search report has been drawn up for all claims

| Place of search | Date of completion of the search | Examiner |
|---|---|---|
| THE HAGUE | 20-12-1989 | VAN LEEUWEN R.H. |

EPO FORM 1503 03.82 (P0401)